# EUROPEAN PATENT APPLICATION

(11) **EP 4 459 702 A1**
(43) Date of publication of application: **06.11.2024**
(21) Application number: 24165947.3
(22) Date of filing: 25.03.2024
(51) Int. Cl.: H01M 4/134, H01M 4/136, H01M 4/1395, H01M 4/1397, H01M 4/38, H01M 4/62, H01M 4/58

(54) **ELECTRODE MIXTURE AND LITHIUM-ION BATTERY**

(30) Priority: 26.04.2023 JP 2023072150
(71) Applicant: TOYOTA JIDOSHA KABUSHIKI KAISHA, Aichi-ken 471-8571 (JP)
(72) Inventor: OTAKI, Mitsutoshi, Aichi-ken, 471-8571 (JP); YOSHIDA, Jun, Aichi-ken, 471-8571 (JP)
(74) Representative: D Young & Co LLP

(57) **Abstract**

The present disclosure provides an electrode mixture having low expansion during charging and a lithium-ion battery comprising such an electrode mixture. The electrode mixture of the present disclosure comprises silicon clathrate active material particles and aluminum fluoride particles, and an average particle size of the aluminum fluoride particles is 3.0 µm or less. The lithium-ion battery of the present disclosure comprises an electrode active material layer, and the electrode active material layer contains the electrode mixture of the present disclosure.

## Description

### FIELD

The present disclosure relates to an electrode mixture and a lithium-ion battery.

### BACKGROUND

In recent years, there has been ongoing development of batteries. For example, in the automotive industry, the development of batteries for use in electric vehicles or hybrid vehicles has been advancing. In addition, silicon is known as an active material used in batteries, particularly lithium-ion batteries.

Silicon active materials have a large theoretical capacity and are effective in high energy densification of batteries. However, silicon active materials have a problem of large expansion during charging. On the other hand, it is known that using a silicon clathrate active material as a silicon active material suppresses expansion during charging.

For example, PTL 1 discloses a silicon clathrate active material comprising a silicon clathrate type II crystal phase and including voids inside primary particles, wherein a void amount of the voids having a fine pore diameter of 100 nm or less is 0.05 cc/g or more and 0.15 cc/g or less.

### [CITATION LIST]

### [PATENT LITERATURE]

[PTL 1] Japanese Unexamined Patent Publication (Kokai) No. 2021-158004

### SUMMARY

### [TECHNICAL PROBLEM]

Although silicon clathrate active materials can suppress expansion during charging as compared to conventional silicon active materials, there is a demand for further suppressing expansion of silicon clathrate active materials during charging.

An object of the present disclosure is to provide an electrode mixture having low expansion during charging and a lithium-ion battery comprising such an electrode mixture.

### [SOLUTION TO PROBLEM]

The present disclosers have discovered that the above object can be achieved by the following means.

### <Aspect 1>

An electrode mixture, comprising silicon clathrate active material particles and aluminum fluoride particles, wherein an average particle size of the aluminum fluoride particles is 3.0 µm or less.

### <Aspect 2>

The electrode mixture according to Aspect 1, wherein an average particle size of the aluminum fluoride particles is 0.1 µm or more and 2.5 µm or less.

### <Aspect 3>

The electrode mixture according to Aspect 2, wherein the average particle size of the aluminum fluoride particles is 0.8 µm or more and 1.8 µm or less.

### <Aspect 4>

The electrode mixture according to any one of Aspects 1 to 3, wherein a ratio of the average particle size of the aluminum fluoride particles relative to an average particle size of the silicon clathrate active material particles is 2.5 or less.

### <Aspect 5>

The electrode mixture according to any one of Aspects 1 to 4, wherein a ratio of a content of the aluminum fluoride particles relative to a content of the silicon clathrate active material particles is less than 2.0% by area when a cross-sectional observation by SEM-EDX measurement is carried out on the electrode mixture.

### <Aspect 6>

A lithium-ion battery, comprising an electrode active material layer, wherein
the electrode active material layer contains the electrode mixture according to any one of Aspects 1 to 5.

### [ADVANTAGEOUS EFFECTS OF INVENTION]

According to the present disclosure, an electrode mixture having low expansion during charging and a lithium-ion battery comprising such an electrode mixture can be provided.

### BRIEF DESCRIPTION OF DRAWINGS

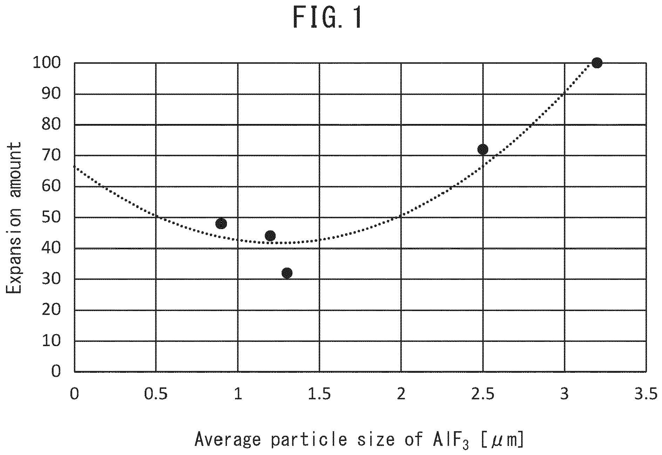

FIG. 1 is a graph showing the relationship between the average particle size of aluminum fluoride particles and the expansion coefficient of a battery.

### DESCRIPTION OF EMBODIMENTS

Hereinafter, embodiments of the present disclosure will be described in detail. It should be noted that the present disclosure is not limited to the following embodiments, and various modifications can be made thereto within the scope of the disclosure.

### «Electrode mixture»

The electrode mixture of the present disclosure comprises silicon clathrate active material particles and aluminum fluoride particles, and an average particle size of the aluminum fluoride particles is 3.0 µm or less.

While an "electrode" relating to the present disclosure may be a positive electrode or a negative electrode, a negative electrode is particularly preferred.

A "mixture" relating to the present disclosure means a composition that can constitute an electrode active material layer as-is or by further containing an additional component. In addition, a "mixture slurry" means a slurry that comprises a dispersion medium in addition to the "mixture" and can be applied and dried to form an electrode active material layer.

A method of obtaining silicon clathrate active material particles is exemplified by a method of removing sodium from a sodium-silicon (NaSi) alloy. The present disclosers have developed a technique of reacting a NaSi alloy with aluminum fluoride to remove sodium from the NaSi alloy.

In this regard, the present disclosers have discovered that the electrode mixture obtained utilizing this technique has room for improvement in terms of an expansion-suppressing effect during charging. Specifically, without intending to be bound by any theory, it was found that due to aluminum fluoride particles having insulating properties remaining in the electrode mixture obtained utilizing this technique, silicon clathrate active material particles are not uniformly charged, and expansion may thereby be increased.

In contrast, since the average particle size of the aluminum fluoride particles in the electrode mixture of the present disclosure is as small as 3.0 µm or less, it is considered that expansion during charging can be suppressed without interfering with uniform charging of the silicon clathrate active material particles.

### <Silicon clathrate active material particles>

The electrode mixture of the present disclosure comprises silicon clathrate active material particles.

The average particle size of the silicon clathrate active material particles may be 0.4 µm or more, 0.6 µm or more, 0.8 µm or more, 0.9 µm or more, 1.0 µm or more, or 1.1 µm or more, and may be 2.0 µm or less, 1.8 µm or less, 1.6 µm or less, 1.5 µm or less, 1.4 µm or less, or 1.3 µm or less.

The average particle size of the silicon clathrate active material particles can be determined by observation with an electron microscope such as SEM, and is determined, for example, as an average value of equivalent circle diameter ( equivalent area diameter) of a plurality of silicon clathrate active material particles. The number of samples is preferably large, for example, 20 or more, and may be 50 or more, or 100 or more.

### <Aluminum fluoride particles>

The electrode mixture of the present disclosure comprises aluminum fluoride particles.

The average particle size of the aluminum fluoride particles is 3.0 µm or less. The average particle size of the aluminum fluoride particles may be 0.1 µm or more, 0.3 µm or more, 0.5 µm or more, 0.6 µm or more, 0.7 µm or more, 0.8 µm or more, or 0.9 µm or more, and may be 2.7 µm or less, 2.5 µm or less, 2.3 µm or less, 2.1 µm or less, 2.0 µm or less, 1.9 µm or less, 1.8 µm or less, 1.7 µm or less, 1.6 µm or less, or 1.5 µm or less.

The average particle size of the aluminum fluoride particles can be determined by observation with an electron microscope such as SEM, and is determined, for example, as an average value of equivalent circle diameter of a plurality of aluminum fluoride particles. The number of samples is preferably large, for example, 20 or more, and may be 50 or more, or 100 or more.

A ratio (AlF3/Si (particle size)) of the average particle size of the aluminum fluoride particles relative to the average particle size of the silicon clathrate active material particles may be 2.5 or less. The ratio may be 0.3 or greater, 0.4 or greater, 0.5 or greater, 0.6 or greater, 0.7 or greater, or 0.8 or greater, and may be 2.3 or less, 2.1 or less, 1.9 or less, 1.7 or less, 1.5 or less, 1.4 or less, or 1.3 or less.

A ratio (AlF3/Si (area)) of the content of the aluminum fluoride particles relative to the content of the silicon clathrate active material particles may be less than 2.0% by area. The ratio may be 0.1% by area or greater, 0.5% by area or greater, or 1.0% by area or greater, and may be 1.9% by area or less, 1.8% by area or less, or 1.7% by area or less.

The AlF₃/Si (area) is obtained by observing a cross-section of the electrode mixture by scanning electron microscope-energy dispersive X-ray spectroscopy (SEM-EDX) measurement, and can be calculated as a ratio of the area of the range indicative of the aluminum fluoride particles relative to the area of the range indicative of the silicon clathrate active material particles.

The silicon clathrate active material particles of the present disclosure can be obtained by any method, although a method of removing sodium from a sodium-silicon (NaSi) alloy is exemplified herein.

Specifically, a NaSi alloy is prepared by reacting a silicon source with a sodium source such as sodium hydride. The NaSi alloy prepared in such a manner is then reacted with aluminum fluoride particles as a sodium trapping agent, whereby silicon clathrate active material particles can be prepared.

Unreacted aluminum fluoride particles in the above reaction can be used as the aluminum fluoride particles of the present disclosure. In addition, aluminum fluoride particles that are commercially available or prepared by a conventional method can be used as the aluminum fluoride particles of the present disclosure.

A means for adjusting particle size may be applied to the above aluminum fluoride particles so that the average particle size thereof falls within the range of the present disclosure. The means for adjusting particle size is exemplified by sieving, but is not limited thereto.

A material comprising silicon clathrate active material particles obtained in such a manner and aluminum fluoride particles can be mixed by any method to prepare the electrode mixture of the present disclosure.

### <<Lithium-ion battery>>

The lithium-ion battery of the present disclosure may be a liquid-based battery or a solid-state battery. It should be noted that a "solid-state battery" relating to the present disclosure means a battery using at least a solid electrolyte as the electrolyte, and therefore a solid-state battery may use a combination of a solid electrolyte and a liquid electrolyte as the electrolyte. In addition, the solid-state battery of the present disclosure may be an all- solid-state battery, i.e., a battery using only a solid electrolyte as the electrolyte.

The lithium-ion battery of the present disclosure comprises an electrode active material layer, and the electrode active material layer contains the electrode mixture of the present disclosure. In particular, a negative electrode mixture may be the electrode mixture of the present disclosure in the lithium-ion battery of the present disclosure, which in this case, may comprise a negative electrode current collector layer, a negative electrode active material layer containing the electrode mixture of the present disclosure, a solid electrolyte layer, a positive electrode active material layer, and a positive electrode current collector layer in this order.

The lithium-ion battery of the present disclosure can be restrained by restraining members such as endplates from both sides in the laminating direction of the above layers. A restraining method is exemplified by a method using restraining torque of bolts, but is not limited thereto.

Hereinafter, the method for manufacturing a battery when a negative electrode mixture is the electrode mixture of the present disclosure will be described.

### <Negative electrode current collector layer>

The material used for the negative electrode current collector layer is not particularly limited. Any material that can be used as a negative electrode current collector of a battery can be appropriately adopted. The material may be, for example, copper, copper alloy, or copper plated or vapor-deposited with nickel, chromium, or carbon, but is not limited thereto.

The shape of the negative electrode current collector layer is not particularly limited, and can include, for example, a foil shape, a plate shape, or a mesh shape. Among these, a foil shape is preferable.

### <Negative electrode active material layer>

The negative electrode active material layer contains the electrode mixture of the present disclosure.

### (Electrode mixture)

The electrode mixture comprises silicon clathrate active material particles as the negative electrode active material and aluminum fluoride particles. The above description relating to the electrode mixture of the present disclosure can be referenced regarding the electrode mixture.

The negative electrode active material layer optionally contains a solid electrolyte, a conductive aid, and a binder.

### (Solid electrolyte)

The material of the solid electrolyte is not particularly limited. Any material that is usable as a solid electrolyte used in lithium-ion batteries can be used. For example, the solid electrolyte may be a sulfide solid electrolyte.

Examples of the sulfide solid electrolyte include, but are not limited to, sulfide amorphous solid electrolytes, sulfide crystalline solid electrolytes, and argyrodite-type solid electrolytes. Specific examples of the sulfide solid electrolyte can include, but are not limited to, Li₂S-P₂S₅-based (such as Li₇P₃S₁₁, Li₃PS₄, and Li₈P₂S₉), Li₂S-SiS₂, LiI-Li₂S-SiS₂, LiI-Li₂S-P₂S₅, LiI-LiBr-Li₂S-P₂S₅, Li₂S-P₂S₅-GeS₂ (such as Li₁₃GeP₃S₁₆ and Li₁₀GeP₂S₁₂), LiI-Li₂S-P₂O₅, LiI-Li₃PO₄-P₂S₅, Li₇₋ₓPS₆₋ₓClₓ, and combinations thereof.

The sulfide solid electrolyte may be a glass or a crystallized glass (glass ceramic).

When the negative electrode active material layer contains a solid electrolyte, a mass ratio (mass of silicon clathrate active material particles : mass of solid electrolyte) of the silicon clathrate active material particles to the solid electrolyte in the negative electrode active material layer is preferably 85:15 to 30:70, and more preferably 80:20 to 40:60.

### (Conductive aid)

The conductive aid is not particularly limited. For example, the conductive aid may be VGCF (vapor-grown carbon fiber), acetylene black (AB), ketjen black (KB), carbon nanotube (CNT), or carbon nanofiber (CNF), but is not limited thereto.

### (Binder)

The binder is not particularly limited. For example, the binder may be of a material such as polyvinylidene fluoride (PVdF), butadiene rubber (BR), or styrene-butadiene rubber (SBR) or a combination thereof, but is not limited thereto.

The thickness of the negative electrode active material layer, for example, may be 0.1 to 1000 µm.

### <Solid electrolyte layer>

The solid electrolyte layer comprises at least a solid electrolyte. In addition, the solid electrolyte layer may comprise a binder in addition to the solid electrolyte, as needed. The above description relating to the negative electrode active material layer of the present disclosure can be referenced regarding the solid electrolyte and the binder.

The thickness of the solid electrolyte layer, for example, is 0.1 to 300 µm, preferably 0.1 to 100 µm.

### <Positive electrode active material layer>

The positive electrode active material layer is a layer containing a positive electrode active material and optionally a solid electrolyte, a conductive aid, and a binder.

The material of the positive electrode active material is not particularly limited. For example, the positive electrode active material may be lithium cobaltate (LiCoO2), lithium nickelate (LiNiO2), lithium manganate (LiMn₂O₄), LiCo_{1/3}Ni_{1/3}Mn_{1/3}O₂, a heteroelement-substituted Li-Mn spinel having a composition represented by Li₁₊ₓMn_{2-x-y}M_{y}O₄ (M is one or more metal elements selected from Al, Mg, Co, Fe, Ni, and Zn), lithium titanate (LiₓTiO_{y}), or lithium metal phosphate (LiMPO₄, where M is one or more metals selected from Fe, Mn, Co, and Ni), but is not limited thereto.

The positive electrode active material can comprise a covering layer. The covering layer is a layer containing a material that has lithium-ion conducting performance, has low reactivity with the positive electrode active material and the solid electrolyte, and can maintain the form of a covering layer that does not flow even when brought into contact with an active material or a solid electrolyte. Specific examples of the material constituting the covering layer can include, but are not limited to, Li₄Ti₅O₁₂ and Li₃PO₄, in addition to LiNbO₃.

Examples of shapes of the positive electrode active material include particulate. The average particle size (D50) of the positive electrode active material is not particularly limited, for example, 10 nm or more, and may be 100 nm or more. The average particle size (D50) of the positive electrode active material, for example, is 50 µm or less, and may be 20 µm or less. The average particle size (D50) can be calculated, for example, with a laser diffraction particle size distribution analyzer or a scanning electron microscope (SEM).

The above description relating to the negative electrode active material layer of the present disclosure can be referenced regarding the solid electrolyte, the conductive aid, and the binder.

When the positive electrode active material layer contains a solid electrolyte, a mass ratio (mass of positive electrode active material : mass of solid electrolyte) of the positive electrode active material to the solid electrolyte in the positive electrode active material layer is preferably 85:15 to 30:70, and more preferably 80:20 to 50:50.

The thickness of the positive electrode active material layer, for example, is 0.1 µm to 1000 µm, preferably 1 µm to 100 µm, and even more preferably 30 µm to 100 µm.

### <Positive electrode current collector layer>

The material used for the positive electrode current collector layer is not particularly limited. Any material that can be used as a positive electrode current collector of a battery can be appropriately adopted. The material may be, for example, SUS, nickel, chromium, gold, platinum, aluminum, iron, titanium, zinc, or one of these metals plated or vapor-deposited with nickel, chromium, or carbon, but is not limited thereto.

The shape of the positive electrode current collector layer is not particularly limited, and can include, for example, a foil shape, a plate shape, or a mesh shape. Among these, a foil shape is preferable.

### EXAMPLES

### <<Synthesis of silicon clathrate active material particles>>

### <Alloying>

### (Comparative Example 1)

Si powder (Japan Pure Chemical Co., Ltd., SIEPB32) was prepared as a silicon (Si) source. This Si powder and metallic lithium (Li) were weighed at a molar ratio of Li/Si = 4.0, and the weighed Si powder and Li were mixed with an agate mortar in an argon atmosphere to obtain a lithium-silicon (LiSi) alloy. The obtained LiSi alloy was reacted with ethanol in an argon atmosphere and treated with hydrogen fluoride (HF) to obtain Si powder having voids inside the primary particles, i.e., Si powder having a porous structure.

The Si powder having a porous structure and sodium hydride (NaH) as a sodium (Na) source were used to manufacture a sodium-silicon (NaSi) alloy. It should be noted that the NaH used was preliminarily washed with hexane. The NaH and the Si powder having a porous structure were weighed at a molar ratio of 1.05: 1, and the weighed NaH and Si powder having a porous structure were mixed with a cutter mill. The obtained mixture was heated under the conditions of 400 °C and 40 h under in argon atmosphere with a heating furnace to obtain a powdery NaSi alloy.

### <Clathratization>

The obtained NaSi alloy and aluminum fluoride (AlF₃) particles were weighed at a molar ratio of 1:0.35, and the weighed NaSi alloy and the AlF₃ particles were mixed with a cutter mill to obtain a reaction starting material. The obtained powdery reaction starting material was charged into a reaction vessel made of stainless steel and heated under the conditions of 310 °C and 60 h in an argon atmosphere with a heating furnace to allow a reaction to obtain silicon clathrate. The obtained silicon clathrate was acid-washed using a mixed solvent of HNO₃ and H₂O mixed at a volume ratio of 10:90 to remove by-products in the reaction product. After washing, the reaction product was filtered, and the filtered solid content was dried at 120 °C for 3 h or more to obtain powdery silicon clathrate. The obtained silicon clathrate was further washed with a 3-wt% HF solution, filtered, and then dried at 120 °C for 3 h or more to obtain the silicon clathrate active material particles of Comparative Example 1. Unreacted AlF₃ particles were used as the AlF₃ particles of Comparative Example 1. It should be noted that the surfaces of the silicon clathrate active material particles may comprise a coating or impurity containing O element, C element, or N element.

### (Example 1)

Except that the alloying temperature was changed to 500 °C and NaSi:AlF₃ (molar ratio) in clathratization was changed to 1:0.5, the silicon clathrate active material particles and AlF3 particles of Example 1 were obtained in the same manner as in Comparative Example 1. It should be noted that the surfaces of the silicon clathrate active material particles may comprise a coating or impurity containing O element, C element, or N element.

### (Example 2)

Except that AlF₃ particles passed through a sieve having a mesh size of 75 µm were used, the silicon clathrate active material particles and AlF₃ particles of Example 2 were obtained in the same manner as in Example 1. It should be noted that the surfaces of the silicon clathrate active material particles may comprise a coating or impurity containing O element, C element, or N element.

### (Example 3)

Except that AlF₃ particles passed through a sieve having a mesh size of 75 µm but not passed through a 32 µm sieve were used, the silicon clathrate active material particles and AlF₃ particles of Example 3 were obtained in the same manner as in Example 1. It should be noted that the surfaces of the silicon clathrate active material particles may comprise a coating or impurity containing O element, C element, or N element.

### (Example 4)

Except that AlF₃ particles passed through a sieve having a mesh size of 20 µm were used, the silicon clathrate active material particles and AlF₃ particles of Example 4 were obtained in the same manner as in Example 1. It should be noted that the surfaces of the silicon clathrate active material particles may comprise a coating or impurity containing O element, C element, or N element.

### <<Production of lithium-ion battery>>

The lithium-ion battery of each example was produced as follows.

### <Preparation of negative electrode mixture>

Butyl butyrate, a 5-wt% butyl butyrate solution of a polyvinylidene fluoride (PVDF)-based binder, vapor-grown carbon fiber (VGCF) as the conductive aid, silicon clathrate active material particles and AlF₃ particles of each example, and a Li₂S-P₂S₅-based glass ceramic as the sulfide solid electrolyte were added to a polypropylene container and stirred with an ultrasonic dispersion apparatus (UH-50 manufactured by SMT) for 30 s. The container was then shaken with a shaker (TTM-1 manufactured by Sibata Scientific Technology Ltd.) for 30 min to obtain a slurry-like negative electrode mixture (negative electrode mixture slurry).

### <Formation of negative electrode active material layer>

The obtained negative electrode mixture slurry was applied onto a copper (Cu) foil as a negative electrode current collector layer by a blade method using an applicator and dried for 30 min on a hot plate heated to 100 °C to form a negative electrode active material layer on the negative electrode current collector layer.

### <Formation of solid electrolyte layer>

Heptane, a 5-wt% heptane solution of a butadiene rubber (BR)-based binder and a Li2S-P2S5-based glass ceramic as the sulfide solid electrolyte were added to a polypropylene container and stirred with an ultrasonic dispersion apparatus (UH-50 manufactured by SMT) for 30 s. The container was then shaken with a shaker (TTM-1 manufactured by Sibata Scientific Technology Ltd.) for 30 min to obtain a solid electrolyte slurry.

The obtained solid electrolyte slurry was applied onto an aluminum (Al) foil as a release sheet by a blade method using an applicator and dried for 30 min on a hot plate heated to 100 °C, whereby a solid electrolyte layer was formed. Three solid electrolyte layers were produced.

### <Preparation of positive electrode mixture>

Butyl butyrate, a 5-wt% butyl butyrate solution of a PVDF-based binder, LiNi_{1/3}Co_{1/3}Mn_{1/3}O₂ having an average particle size of 6 µm as the positive electrode active material, a Li₂S-P₂S₅-based glass ceramic as the sulfide solid electrolyte, and VGCF as the conductive aid were added to a polypropylene container and stirred with an ultrasonic dispersion apparatus (UH-50 manufactured by SMT) for 30 s. The container was then shaken with a shaker (TTM-1 manufactured by Sibata Scientific Technology Ltd.) for 3 min, further stirring was carried out with the ultrasonic dispersion apparatus for 30 s, and the container was shaken with a shaker for 3 min to obtain a slurry-like positive electrode mixture (positive electrode mixture slurry).

### <Formation of positive electrode active material layer>

The obtained positive electrode mixture slurry was applied onto an Al foil as a positive electrode current collector layer by a blade method using an applicator and dried for 30 min on a hot plate heated to 100 °C, whereby a positive electrode active material layer was formed on the positive electrode current collector layer.

### <Assembly of battery>

The positive electrode current collector layer, the positive electrode active material layer, and a first solid electrolyte layer were laminated in this order. The laminated product was set in a roll press machine and pressed at a pressing pressure of 100 kN/cm and a pressing temperature of 165 °C, whereby a positive electrode laminated body was obtained.

The negative electrode current collector layer, the negative electrode active material layer, and a second solid electrolyte layer were laminated in this order. The laminated product was set in a roll press machine and pressed at a pressing pressure of 60 kN/cm and a pressing temperature of 25 °C, whereby a negative electrode laminated body was obtained.

The Al foil as a release sheet was peeled off from the solid electrolyte layer surface of each of the positive electrode laminated body and the negative electrode laminated body. The Al foil as a release sheet was then peeled off from a third solid electrolyte layer.

The positive electrode laminated body and the negative electrode laminated body were set so that the solid electrolyte layer side of each thereof faces the third solid electrolyte layer and laminated. The laminated body was set in a flat uniaxial press machine and temporarily pressed at 100 MPa and 25 °C for 10 s. The laminated body was finally set in the flat uniaxial press machine and pressed at a pressing pressure of 200 MPa and a pressing temperature of 120 °C for 1 min. As a result, an all-solid-state battery was obtained.

### «Evaluation»

### <Average particle size>

The average particle sizes of the silicon clathrate active material particles and the AlF₃ particles were calculated by acquiring cross-sectional images of the negative electrode active material layer with a scanning electron microscope (SEM) and analyzing the acquired images. Specifically, the number of samples was 100 or more, and the average values of equivalent circle diameter of the silicon clathrate active material particles and the AlF₃ particles were determined.

### <AlF₃/Si (particle size)>

AlF3/Si (particle size) was calculated by dividing the average particle size of AlF₃ particles by the silicon clathrate active material particles.

### <AlF₃/Si (area)>

Cross-sections of the obtained negative electrode active material layer were observed by SEM-EDX measurement, and from a ratio of the area of the range indicative of the aluminum fluoride particles relative to the area of the range indicative of the silicon clathrate active material particles, AlF3/Si (area) was calculated.

### <Expansion amount>

The restraining pressure increase amount of each produced battery when restrained at a predetermined restraining pressure using a restraining jig and charged by constant current-constant voltage to 4.55 V at a 10-h rate (1/10 C) was measured, and this was defined as the expansion amount in the present disclosure. It should be noted that the restraining pressure increase amount is the difference between the highest value and the lowest value in restraining pressure. The values of the Examples are shown as relative values when the value of Comparative Example 1 was set to 100.

### «Results»

Results of the above evaluation of each example are shown in the table. It should be noted that the "AlF₃ classification" in Table 1 indicates the presence or absence of classification using a metal sieve and mesh size of the metal sieve. "Si" indicates silicon clathrate active material particles.

**[Tab;e 1]**

| NaSi alloy preparation temperature NaSi:AlF₃ [°C] (molar ratio) | | | AlF₃ classification [µm] | Average particle size [µm] | | AlF₃/Si | | Expansion amount |
|---|---|---|---|---|---|---|---|---|
| | | | | Si | AlF₃ | Particle size | Area [%] | |
| Comparative Example 1 | 400 | 1:0.35 | - | 1.2 | 3.2 | 2.7 | 2.0 | 100 |
| Example 1 | 500 | 1:0.5 | - | 1.2 | 2.5 | 2.1 | 1.6 | 72 |
| Example 2 | 500 | 1:0.5 | 75 | 1.2 | 1.3 | 1.1 | 1.3 | 32 |
| Example 3 | 500 | 1:0.5 | 75 (not passed through 32 µm) | 1.2 | 1.2 | 1.0 | 1.5 | 44 |
| Example 4 | 500 | 1:0.5 | 20 | 1.2 | 0.9 | 0.8 | 1.5 | 48 |

As shown in Table 1, the expansion coefficients of the batteries of Examples 1 to 4, in which the average particle sizes of AlF₃ particles are within the range of the present disclosure, were small. In addition, the expansion coefficients of the batteries of Example 3 and Example 4, in which the average particle sizes of AlF₃ particles were 1.2 µm and 0.9 µm, respectively, were even smaller. The expansion coefficient of the battery of Example 2, in which the average particle size of AlF₃ particles was 1.3 µm, was the smallest.

## Claims

1. An electrode mixture, comprising silicon clathrate active material particles and aluminum fluoride particles, wherein an average particle size of the aluminum fluoride particles is 3.0 µm or less.

2. The electrode mixture according to claim 1, wherein an average particle size of the aluminum fluoride particles is 0.1 µm or more and 2.5 µm or less.

3. The electrode mixture according to claim 2, wherein the average particle size of the aluminum fluoride particles is 0.8 µm or more and 1.8 µm or less.

4. The electrode mixture according to claim 1, wherein a ratio of the average particle size of the aluminum fluoride particles relative to an average particle size of the silicon clathrate active material particles is 2.5 or less.

5. The electrode mixture according to claim 1, wherein a ratio of a content of the aluminum fluoride particles relative to a content of the silicon clathrate active material particles is less than 2.0% by area when a cross-sectional observation by SEM-EDX measurement is carried out on the electrode mixture.

6. A lithium-ion battery, comprising an electrode active material layer, wherein
the electrode active material layer contains the electrode mixture according to any one of claims 1 to 5.
